# EUROPEAN PATENT APPLICATION

(11) **EP 4 052 996 A1**
(43) Date of publication of application: **07.09.2022**
(21) Application number: 21212066.1
(22) Date of filing: 02.12.2021
(51) Int. Cl.: B62D 15/02, B60W 30/06

(54) **AUTOMATIC PARKING DEVICE**

(30) Priority: 04.03.2021 JP 2021034483
(71) Applicant: Suzuki Motor Corporation, Shizuoka 432-8611 (JP)
(72) Inventor: SUYAMA, Yozo, Hamamatsu-shi, Shizuoka, 432-8611 (JP)
(74) Representative: Haseltine Lake Kempner LLP

(57) **Abstract**

[Problem to be Solved] To efficiently exit a vehicle from a difficult situation and improve the efficiency of performing parking control for parking the vehicle in a parking area.

[Solution] An automatic parking device of the present invention includes a parking control unit for executing parking control for parking a vehicle in a parking area, and the parking control unit executes automatic stop when a stop condition is satisfied and executes exit control so that an exit condition is satisfied. The stop condition is set based on a situation in which the parking control is hindered, and the exit condition is set based on an exit-sufficient state in which an exit angle which is an angle formed between a first unit vector which is along a central axis line in the width direction of the vehicle and is oriented to the traveling direction along which the vehicle traveled on a front-side road R before execution of the parking control, and a second unit vector which is oriented to the front side of the vehicle along the central axis line of the vehicle during execution of the exit control is within an acute-angle exit range between 0 degrees to an exit angle reference value or within an obtuse-angle exit range between (180 degrees - the exit angle reference value) to 180 degrees, and the exit angle reference value is set to be greater as the width of the front-side road is greater.

## Description

### [Technical Field]

The present invention relates to an automatic parking device that enables a vehicle to automatically drive in order to park the vehicle in a specific parking area.

### [Background Art]

Automatic parking devices enabling automatic driving of a vehicle, such as an automobile to be performed to park the vehicle in a specific parking area have been widely available. Such an automatic parking device calculates a route for moving the vehicle equipped with the automatic parking device from the current place into a parking area, and can perform automatic driving of the vehicle along the calculated route. However, during automatic driving, there is a risk that the vehicle will encounter a situation in which the vehicle cannot move according to the calculated route due to an unexpected event.
Therefore, various automatic parking devices have been proposed to enable the vehicle to exit from such a situation.

An example of such an automatic parking device is an automatic steering device for a vehicle including a steering actuator for controlling a steering angle of wheels based on a driver's steering operation, a storage means for storing a movement path (route) of the vehicle to a target stop position in advance, a control means for automatically controlling the steering actuator based on memory contents of the storage means instead of the driver's steering operation, a braking means for braking wheels based on a driver's operation, and a moving direction detecting means for detecting an actual moving direction of the vehicle, wherein when the moving direction of the vehicle detected by the moving direction detecting means is different from a moving direction of the vehicle selected by a selecting lever, the control means stops the automatic steering control or the storage means outputs a movement path so that the vehicle moves in a reverse direction to an original movement route (see, for example, Patent Literature 1).

### [Citation List]

### [Patent Literature]

[Patent Literature 1] JP H10-167104 A

### [Summary of Invention]

### [Problems to be Solved by the Invention]

However, in the above-mentioned example of the automatic parking device, when the vehicle cannot move along an initially calculated route due to changes in a slope of a travel path, a road surface condition, etc., the automatic parking device can merely stop the vehicle or return the vehicle to its original route. Furthermore, the automatic parking device is configured to be capable of measuring a distance between the vehicle and an obstacle by using sensors such as a sonar and a camera installed on the vehicle, and performing automatic driving of the vehicle so that the distance between the vehicle and the obstacle is made as small as possible. Therefore, the automatic parking device may calculate and set a route in which the distance between the vehicle and the obstacle may be too small for a driver to avoid contact between the vehicle and the obstacle depending on the driver's operation.

In the above-mentioned example of the automatic parking device, for example, a new obstacle which was not recognized at the start of automatic parking may be detected on a route which was calculated at the start of the automatic parking so that the vehicle may encounter a situation in which it is difficult to move along the calculated route. In such a case, the vehicle may not be able to exit from this difficult situation by the automatic parking control, and furthermore it may also be difficult for the driver to drive the vehicle out of this difficult situation.

In view of such circumstances, it is desired in the automatic parking device that even when the vehicle encounters a situation in which it is difficult for the vehicle to move during automatic driving, the vehicle can be efficiently exited from this difficult situation, in particular, the vehicle can be efficiently exited from this difficult situation toward a situation in which the vehicle can be easily moved by a driver's operation. Furthermore, it is desired to increase efficiency of the parking control for parking the vehicle in a specific parking area.

### [Means for Solving the Problems]

In order to solve the problems, an automatic parking device according to an aspect includes a parking control unit configured to be capable of performing parking control for enabling execution of automatic forward movement, automatic reverse movement and automatic stop of a vehicle in order to park the vehicle in a specific parking area, wherein the parking control unit is configured to perform the automatic stop when a predetermined stop condition is satisfied, and to perform exit control for enabling execution of automatic forward movement, automatic reverse movement and automatic stop of the vehicle in order to move the vehicle so that a predetermined exit condition is satisfied; the stop condition is set based on a situation in which execution of the parking control is hindered; the exit condition is determined based on an exit-sufficient state in which an exit angle is either within an acute-angle exit range or within an obtuse-angle exit range; the exit angle is an angle formed between a first unit vector which is along a central axis line in a width direction of the vehicle and is oriented to a traveling direction along which the vehicle traveled on a front-side road adjacent to the parking area before execution of the parking control, and a second unit vector which is oriented to a front side of the vehicle along the central axis line in the width direction of the vehicle during execution of the exit control; the acute-angle exit range is equal to 0 degrees or more and a predetermined exit angle reference value or less; the obtuse-angle exit range is equal to (180 degrees - the predetermined exit angle reference value) or more and 180 degrees or less; the exit angle reference value is within a range of 0 degrees or more and less than 90 degrees; the front-side road is located on a side from which the vehicle enters the parking area during the parking control with respect to a front-rear direction of the parking area, and extends in a direction intersecting the front-rear direction of the parking area; and the exit angle reference value is set greater as a width of the front-side road is greater.

### [Advantageous Effect of Invention]

In the automatic parking device according to one aspect, even when the vehicle encounters a situation in which it is difficult for the vehicle to move during automatic driving, the vehicle can be efficiently exited from this difficult situation. In particular, the vehicle can be efficiently exited, by a driver's operation, from this difficult situation toward a situation in which the vehicle can be easily moved. Furthermore, the efficiency of the parking control for parking the vehicle in a specific parking area can be enhanced.

### [Brief Description of Drawings]

[Figure 1] Figure 1 is a configuration diagram of a vehicle having an automatic parking device according to an embodiment.
[Figure 2] Figure 2 is a plan view schematically showing an example of the vehicle and the surroundings thereof during execution of parking control in the embodiment.
[Figure 3] Figure 3 is a plan view schematically showing an example of the vehicle and the surroundings thereof in a state in which a stop condition is satisfied during execution of the parking control in the embodiment.
[Figure 4] Figure 4 is a plan view schematically showing an example of the vehicle and the surroundings thereof in a state in which an exit condition is satisfied in exit control in the embodiment.
[Figure 5] Figure 5 is a plan view schematically showing an example of the vehicle and the surroundings thereof in a state in which a parking-allowable condition is satisfied during execution of the exit control in the embodiment.
[Figure 6] Figure 6 is a flowchart illustrating an example of an exit control method of the automatic parking device according to the embodiment.

### [Mode for Carrying Out the Invention]

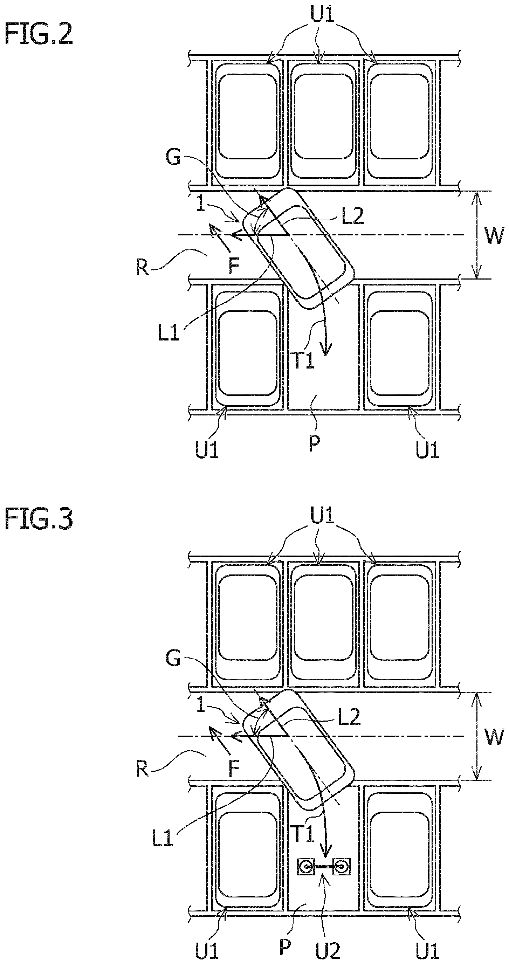

An automatic parking device according to an embodiment will be described below. Note that a vehicle to which the automatic parking device according to the present embodiment is applied is an automobile. However, the automatic parking device can also be applied to vehicles other than automobiles. Furthermore, in the following description, a left side indicates a left side when facing the front side of the vehicle, and a right side indicates a right side when facing the front side of the vehicle. In Figures 2 to 5, the front side of the vehicle 1 is designated by a one-headed arrow F.

### Outline of Automatic Parking Device and Vehicle

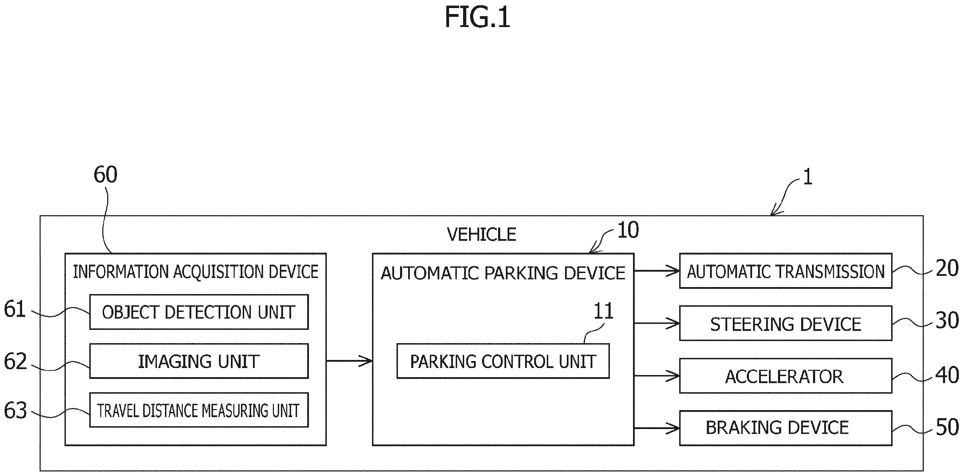

The outline of an automatic parking device 10 and a vehicle 1 according to the present embodiment will be described with reference to Figures 1 to 5. The automatic parking device 10 and the vehicle 1 according to the present embodiment are generally configured as follows. As shown in Figure 1, the vehicle 1 includes the automatic parking device 10.

The automatic parking device 10 includes a parking control unit 11. With reference to Figures 1 and 2, the parking control unit 11 is capable of performing parking control for enabling execution of automatic forward movement, automatic reverse movement, and automatic stop of the vehicle 1 in order to park the vehicle 1 in a specific parking area P.

With reference to Figures 1, 3, and 4, when a predetermined stop condition is satisfied, the parking control unit 11 executes automatic stop, and performs exit control for enabling execution of automatic forward movement, automatic reverse movement, and automatic stop of the vehicle in order to move the vehicle 1 so that a predetermined exit condition is satisfied. Here, as shown in Figure 3, the stop condition is set based on a situation in which the execution of parking control is hindered.

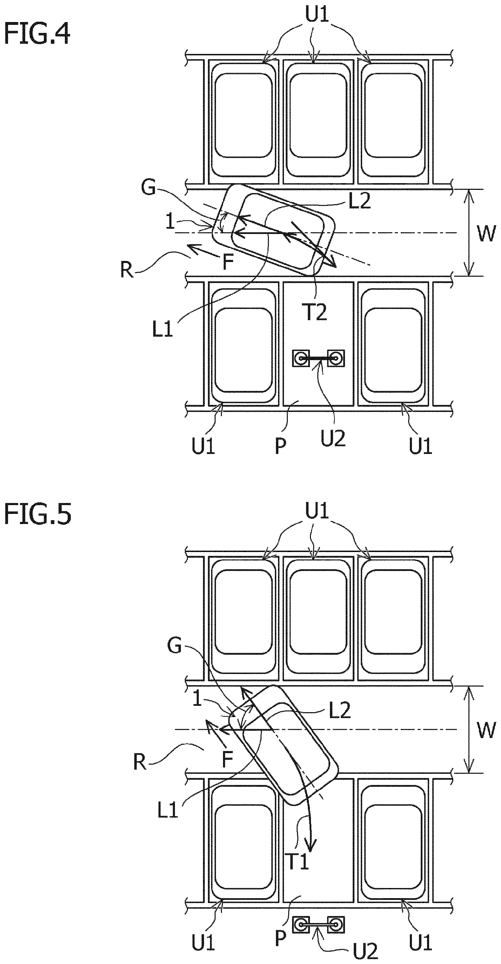

As shown in Figure 4, the exit condition is determined based on an exit sufficient state in which an exit angle G is either within an acute-angle exit range or within an obtuse-angle exit range. The exit angle G is an angle formed between a first unit vector L1 which is along a central axis line in a width direction of the vehicle 1 and is oriented to a traveling direction along which the vehicle 1 traveled on a front-side road R adjacent to a parking area P before execution of parking control, and a second unit vector L2 which is oriented to the front side of the vehicle along the central axis line in the width direction of the vehicle 1 during execution of exit control.

The acute-angle exit range is equal to 0 degrees or more and a predetermined exit angle reference value G1 or less. The obtuse-angle exit range is equal to (180 degrees - the predetermined exit angle reference value G1) or more and 180 degrees or less. The exit angle reference value G1 is within a range of 0 degree or more and less than 90 degrees. The front-side road R is a road R which is located on a side from which the vehicle 1 enters a parking area P during the parking control with respect to a front-rear direction of the parking area P, and extends in a direction intersecting the front-rear direction of the parking area P. In such an automatic parking device 10, the exit angle reference value G1 is set to increase as a width W of the front-side road R increases.

Furthermore, the automatic parking device 10 and the vehicle 1 according to the present embodiment can be generally configured as follows. Referring to Figure 4, the exit condition which serves as a criterion for determining completion of the exit control is set to be satisfied when an exit continuation distance D which is a distance D by which the vehicle 1 has continued to travel in the exit-sufficient state in which the exit angle G is either within the acute-angle exit range or within the obtuse-angle exit range as described above is equal to a predetermined exit continuation distance threshold value D1 or more. Furthermore, the exit-sufficient state can only mean a state in which the exit angle G is within the acute-angle exit range. In this case, the vehicle 1 under the exit-sufficient state may be oriented substantially in the same direction as the direction of the vehicle 1 that has traveled on the front-side road R before the execution of the parking control.

Referring to Figures 1 and 5, the parking control unit 11 is configured to stop the exit control and resume the parking control when a predetermined parking-allowable condition is satisfied during the exit control. The parking-allowable condition is set based on the situation in which the vehicle 1 can be parked in the parking area P.

### Details of Vehicle

Referring to Figure 1, the vehicle 1 according to the present embodiment can be configured in detail as follows. The vehicle 1 includes an automatic transmission 20 for enabling switching among a D range (drive range) for driving the vehicle 1 forward, an R range (reverse range) for driving the vehicle 1 in a reverse direction, and a P range (parking range) for stopping the vehicle 1. The vehicle 1 also includes a steering device 30 having a steering wheel and the like. The vehicle 1 includes an accelerator 40 having an accelerator pedal and the like. The vehicle 1 includes a braking device 50 having a brake pedal and the like.

The vehicle 1 includes an information acquisition device 60 which is configured to be capable of acquiring information on the vehicle 1 and information on surroundings of the vehicle 1. The information acquisition device 60 includes an object detection unit 61 which is configured to be capable of detecting objects existing around the vehicle 1. The object detection unit 61 is configured to be capable of detecting distances to the objects existing around the vehicle 1 by transmitting and receiving laser light, ultrasonic waves, millimeter waves, or the like. For example, the object detection unit 61 may include a sonar sensor. However, the object detection unit may include an infrared LiDAR, a millimeter wave radar, or the like in place of the sonar sensor or in addition to the sonar sensor.

The information acquisition device 60 includes an imaging unit 62 configured to be capable of imaging a peripheral region of the vehicle 1. The imaging unit 62 may include a camera. However, the imaging unit may also include an imaging means other than a camera.

The information acquisition device 60 includes a travel distance measuring unit 63 capable of measuring a travel distance of the vehicle 1. The travel distance measuring unit 63 can include a travel distance calculating means for calculating the travel distance from a vehicle speed and elapsed time. However, the travel distance measuring unit may include a travel distance measuring unit of GNSS (Global Navigation Satellite System) or the like in place of, or in addition to, the travel distance calculating means.

### Details of Automatic Parking Device

Referring to Figures 1 to 5, the automatic parking device 10 according to the present embodiment can be configured in detail as follows. The automatic parking device 10 is configured to include electronic components such as CPU (Central Processing Unit), RAM (Random Access Memory), ROM (Read Only Memory), a flash memory, an input interface, and an output interface, and an electric circuit on which such electronic components are arranged. In the ROM are stored a program for performing the function of the automatic parking device 10 together with various control constants, various maps, and the like. Therefore, when the CPU executes the program stored in the ROM, the function of the automatic parking device 10 can be performed. However, the automatic parking device is not limited to this configuration.

As described above, the parking control unit 11 is capable of performing automatic forward movement, automatic reverse movement, and automatic stop in the parking control and the exit control. The parking control unit 11 of the automatic parking device 10 controls the automatic transmission 20 so as to set to the D range in the automatic forward movement. The parking control unit 11 controls the automatic transmission 20 so as to set to the R range in the automatic reverse movement. The parking control unit 11 controls the automatic transmission 20 so as to set to the P range in the automatic stop.

Furthermore, the parking control unit 11 is also capable of performing automatic steering and automatic vehicle speed change in the parking control and the exit control. The parking control unit 11 can control the steering device 30 so as to move the vehicle 1 along a parking route T1 or an exit route T2 described later in the automatic steering. The parking control unit 11 can control the accelerator 40 and the braking device 50 so as to move the vehicle 1 at a parking vehicle speed or an exit vehicle speed described later in the automatic vehicle speed change.

Referring to Figures 1 and 2, prior to the start of the parking control, the parking control unit 11 can acquire information on the periphery including basic obstacles U1 located around the vehicle 1 on the front-side road R, the front-side road R, and the parking area P by at least one of the object detection unit 61 and the imaging unit 62. The parking control unit 11 identifies the basic obstacles U1 and the front-side road R from the acquired peripheral information.

The parking control unit 11 is configured to search for the parking area P in which the vehicle 1 can park while avoiding the basic obstacles U1 identified from the acquired peripheral information, to set a parking route T1 (indicated by a virtual line) for moving the vehicle 1 to reach the parking area P from the current location, and to set a parking vehicle speed for moving the vehicle 1 along the parking route T1. The parking control unit 11 repeatedly executes the setting of the parking route T1 and the setting of the parking vehicle speed during the execution of the parking control.

The search for the parking area P is performed in a state in which the driver has spotted an available parking space, and thus, the parking area P can be detected in most cases in the search for the parking area P. The basic obstacles U1 are obstacles located outside the range of the parking route T1 and outside the range of the parking area P.

The parking control unit 11 can acquire information on a current location of the vehicle 1 based on position information of the vehicle 1 calculated by using various numerical values acquired by using a wheel speed sensor (not shown) and a steering angle sensor (not shown) of the vehicle 1, and position information of the parking area P recognized by at least one of the object detection unit 61 and the imaging unit 62. Based on the acquired information on the current location and the information on the parking route T1, the parking control unit 11 can determine whether the vehicle 1 has reached the parking area P. When the vehicle 1 has reached the parking area P, the parking control unit 11 terminates the parking control.

Referring to Figures 1 and 3, the parking control unit 11 repeatedly determines whether the above-mentioned stop condition is satisfied during the execution of the parking control. For example, the parking control unit 11 can determine that the stop condition is satisfied when it becomes impossible to set a new parking route T1 due to information about an additional obstacle U2 acquired by at least one of the object detection unit 61 and the imaging unit 62 during the execution of the parking control. When the stop condition is satisfied, the parking control unit 11 automatically stops the vehicle 1 to stop the parking control.

After stopping the parking control, the parking control unit 11 sets an exit route T2 (indicated by a virtual line) for moving the vehicle 1 from the current location to the front-side road R, and sets an exit vehicle speed for moving the vehicle 1 along the exit route T2. The parking control unit 11 repeatedly executes the setting of the exit route T2 and the setting of the exit vehicle speed during the execution of the exit control.

Referring to Figures 1 and 4, the parking control unit 11 repeatedly determines whether the vehicle 1 is in the exit-sufficient state during the execution of the exit control. In order to determine the exit-sufficient state, the parking control unit 11 sets the first unit vector L1 and the width W of the front-side road R from the information about the front-side road R acquired by at least one of the object detection unit 61 and the imaging unit 62. The first unit vector L1 may also be defined to extend along the extending direction of the front-side road R.

The parking control unit 11 also sets the second unit vector L2 from the position information of the vehicle 1 calculated by using various numerical values acquired by the object detection unit 61, the imaging unit 62, the wheel speed sensor (not shown) and the steering angle sensor (not shown) of the vehicle 1.

Furthermore, the parking control unit 11 calculates the exit angle G which is the angle formed between the first and second unit vectors L1 and L2 that have been set. Note that the exit angle is assumed to be within the range of 0 degrees or more and 180 degrees or less. The exit angle G may be set to an angle calculated from an inner product of the first and second unit vectors L1 and L2. The parking control unit 11 also sets the exit angle reference value G1 based on the set width W of the front-side road R. The parking control unit 11 calculates the exit continuation distance D based on the determination of the exit-sufficient state and the travel distance measured by the travel distance measuring unit 63. The parking control unit 11 determines whether the calculated exit continuation distance D is not less than a preset exit continuation distance threshold value D1. The parking control unit 11 terminates the exit control when the calculated exit continuation distance D is not less than the preset exit continuation distance threshold value D1. Note that the exit continuation distance threshold value D1 can be changed according to various conditions.

The parking control unit 11 repeatedly determines whether the above-mentioned parking-allowable condition is satisfied during the execution of the exit control. For example, when the parking control unit 11 searches for a parking route T1 for moving the vehicle 1 to reach the parking area P from the current location during the execution of the exit control and finds the parking route T1 in this search, the parking control unit 11 can determine that the parking-allowable condition has been satisfied. When the parking-allowable condition has been satisfied, the parking control unit 11 automatically stops the vehicle 1 in order to stop the exit control. Furthermore, the parking control unit 11 can resume the parking control so as to move the vehicle 1 along the parking route T1 that has just been found.

### Exit Control Method for Automatic Parking Device

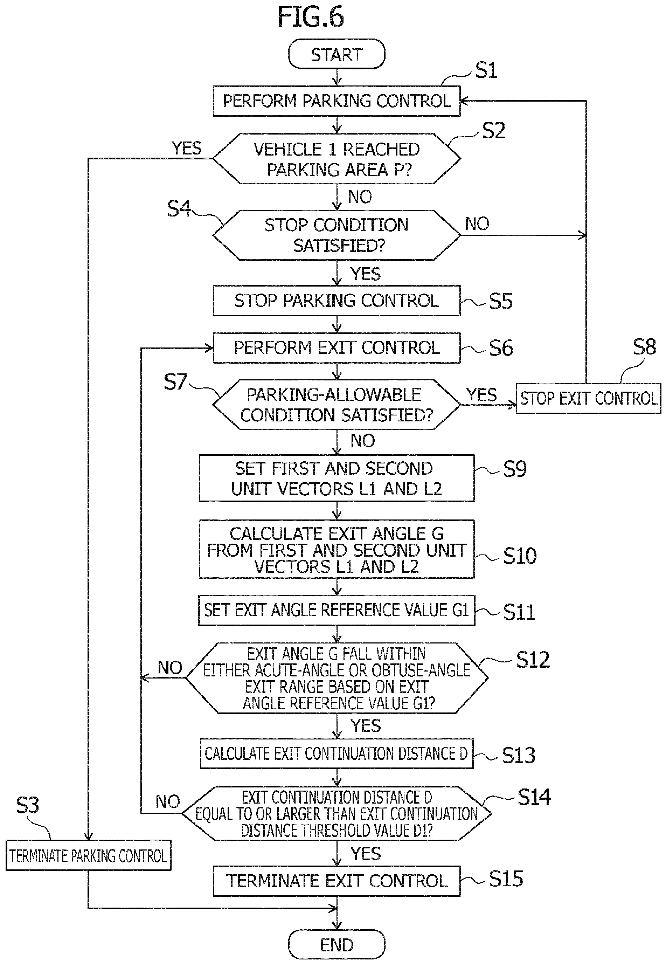

An example of an exit control method for the automatic parking device 10 according to the present embodiment will be described with reference to Figure 6. First, the parking control is executed so that the vehicle 1 reaches the parking area P from the current location (step S1). It is determined whether the vehicle 1 has reached the parking area P (step S2). When the vehicle 1 has reached the parking area P (YES), the parking control is terminated (step S3). When the vehicle 1 has not reached the parking area P (NO), it is determined whether the stop condition is satisfied so as to interrupt the execution of the parking control (step S4).

When the stop condition has not been satisfied (NO), the parking control is continued (step S1). When the stop condition has been satisfied (YES), the vehicle 1 is automatically stopped in order to stop the parking control (step S5). The exit control is executed so as to move the vehicle 1 from the current location to the front-side road R (step S6).

It is determined whether the parking-allowable condition has been satisfied so that the vehicle 1 can be parked in the parking area P (step S7). When the parking-allowable condition has been satisfied (YES), the vehicle 1 is automatically stopped in order to stop the exit control (step S8). The parking control is executed again (step S1). When the parking-allowable condition has not been satisfied (NO), the first unit vector L1 which is along the central axis line in the width direction of the vehicle 1 and is oriented to the traveling direction along which the vehicle traveled on the front-side road R adjacent to the parking area P before execution of the parking control is set, and the second unit vector L2 which is oriented to the front side of the vehicle along the central axis line in the width direction of the vehicle 1 during execution of the exit control is set (step S9).

The exit angle G is calculated from the inner product of the first unit vector L1 and the second unit vector L2 (step S10). The exit angle reference value G1 is set based on the width W of the front-side road R (step S11). It is determined whether the vehicle 1 is in the exit-sufficient state in which the exit angle G is either within the acute-angle exit range between 0 degrees or more and the predetermined exit angle reference value G1 or less or within the obtuse-angle exit range between (180 degrees - the predetermined exit angle reference value G1) or more and 180 degrees or less (step S12).

When the vehicle 1 is not in the exit-sufficient state (NO), the exit control is continued (step S6). When the vehicle 1 is in the exit-sufficient state (YES), the exit continuation distance D which is the travel distance of the vehicle 1 in the exit-sufficient state is calculated (step S13).

It is determined whether the exit continuation distance D is not less than the exit continuation distance threshold value D1 (step S14). When the exit continuation distance D is less than the exit continuation distance threshold value D1 (NO), the exit control is continued (step S6). When the exit continuation distance D is not less than the exit continuation distance threshold value D1 (YES), the exit control is terminated (step S15).

As described above, the automatic parking device 10 according to the present embodiment includes the parking control unit 11 configured to be capable of performing parking control for enabling execution of automatic forward movement, automatic reverse movement and automatic stop of the vehicle 1 in order to park the vehicle 1 into a specific parking area P. The parking control unit 11 is configured to perform the automatic stop when a predetermined stop condition is satisfied and to perform exit control for enabling execution of the automatic forward movement, the automatic reverse movement and the automatic stop of the vehicle 1 in order to move the vehicle 1 so that a predetermined exit condition is satisfied. The stop condition is set based on a situation in which execution of the parking control is hindered. The exit condition is determined based on an exit-sufficient state in which an exit angle G is either within an acute-angle exit range or within an obtuse-angle exit range. The exit angle G is an angle formed between a first unit vector L1 which is along a central axis line in a width direction of the vehicle 1 and is oriented to a traveling direction along which the vehicle traveled on a front-side road R adjacent to the parking area P before execution of the parking control, and a second unit vector L2 which is oriented a front side of the vehicle along the central axis line in the width direction of the vehicle 1 during execution of the exit control. The acute-angle exit range is equal to 0 degrees or more and a predetermined exit angle reference value G1 or less. The obtuse-angle exit range is equal to (180 degrees - the predetermined exit angle reference value G1) or more and 180 degrees or less. The exit angle reference value G1 is within a range of 0 degrees or more and less than 90 degrees. The front-side road R is located on a side from which the vehicle 1 enters the parking area P during the parking control with respect to a front-rear direction of the parking area P, and extends in a direction intersecting the front-rear direction of the parking area P. The exit angle reference value G1 is set greater as a width W of the front-side road R is greater.

Generally, when automatic parking control is being performed, unforeseen situations may occur, for example, a new obstacle that was not recognized at the start of the parking control may be detected on a parking route which was calculated at the start of the parking control, and a width of the parking area which was estimated at the start of the parking control may become insufficient to park the vehicle due to the detection of the new obstacle, which may hinder the parking control from being performed.

In view of such circumstances, in the automatic parking device 10 according to the present embodiment, a stop condition is set based on the above situations, and when the stop condition is satisfied, the vehicle 1 is automatically stopped, and as a result, the parking control is stopped. Furthermore, after the parking control is stopped, the exit control for moving the vehicle 1 is performed so that a predetermined exit condition is satisfied. This exit condition is satisfied when the vehicle 1 is at least in the exit-sufficient state, and the exit angle reference value G1 is set to be greater as the width W of the front-side road R is greater.

In such an automatic parking device 10, when the exit condition is satisfied, it is possible for a driver to easily drive and return the vehicle 1 to a movable state on the front-side road R. Furthermore, since the exit angle reference value G1 of the exit condition is set to be greater as the width W of the front-side road R is greater, it is possible to avoid unnecessary turning to be performed when the width W of the front-side road R is great. As a result, the number of turnings of the vehicle 1 can be reduced in the exit control.

Therefore, according to the automatic parking device 10 of the present embodiment, even when the vehicle 1 encounters a situation in which it is difficult to move during parking control, the vehicle 1 can be efficiently exited from this difficult situation, in particular, the vehicle 1 can be efficiently exited by the driver's operation from such a difficult situation to a situation in which the vehicle 1 can easily move, and furthermore it is possible to improve the efficiency of parking control for parking the vehicle 1 in a specific parking area P.

In the automatic parking device 10 according to the present embodiment, the exit condition is set to be satisfied when the exit continuation distance D which is the distance at which the vehicle 1 continues to travel in the exit-sufficient state is not less than a predetermined exit continuation distance threshold value D1.

In the automatic parking device 10, even when the exit angle G temporarily falls within either the acute-angle or obtuse-angle exit range, there is a risk that will become difficult again for the vehicle 1 to exit from the difficult situation due to the driver's operation immediately after the driver's operation is resumed.

In view of such circumstances, in the automatic parking device 10 according to the present embodiment, it is determined that the exit condition is satisfied when the exit continuation distance D by which the exit-sufficient state in which the exit angle G is within either the acute-angle or the obtuse-angle exit range continues is not less than the exit continuation distance threshold value D1. Therefore, in the exit control, the vehicle 1 can be efficiently and stably returned to a state in which the vehicle 1 can be easily moved by the driver's operation on the front-side road R.

In the automatic parking device 10 according to the present embodiment, the exit-sufficient state is set to a state in which the exit angle G is only within the acute-angle exit range. Therefore, the vehicle 1 in the exit-sufficient state can be oriented substantially in the same direction as a direction along which the vehicle 1 traveled on the front-side road R before the execution of the parking control. In this case, in the exit control, the vehicle 1 can be more reliably returned to a state in which the vehicle 1 can be easily moved along the front-side road R by the driver's operation.

In the automatic parking device 10 according to the present embodiment, the parking control unit 11 is configured to stop the exit control and to perform the parking control again when a predetermined parking-allowable condition is satisfied during the exit control, and the parking-allowable condition is set based on the situation in which the vehicle 1 can be parked in the parking area P.

In such an automatic parking device 10, for example, when an additional obstacle U2 that has hindered the execution of the parking control disappears during the exit control, the exit control is stopped, and then the parking control can be resumed. In this case, for example, by resuming the parking control based on the parking area P which had been recognized in the parking control before the start of the exit control, search for a parking area P again can be omitted. Therefore, it is possible to improve the efficiency of performing parking control for parking the vehicle 1 in a specific parking area P.

Although the embodiment of the present invention has been described so far, the present invention is not limited to the above-described embodiment, and the present invention can be modified and changed based on the technical concept thereof.

### [Reference Signs List]

- 1: vehicle
- 10: automatic parking device, 11 ... parking control unit
- P: parking area, R ... front-side road, L1 ... first unit vector, L2 ... second unit vector,
- G: exit angle, G1 ... exit angle reference value, D ... exit continuation distance, D1 ... exit continuation distance threshold value

## Claims

1. An automatic parking device that comprises a parking control unit configured to be capable of performing parking control for enabling execution of automatic forward movement, automatic reverse movement and automatic stop of a vehicle in order to park the vehicle into a specific parking area, wherein:
the parking control unit is configured to perform the automatic stop when a predetermined stop condition is satisfied, and to perform exit control for enabling execution of the automatic forward movement, the automatic reverse movement and the automatic stop of the vehicle in order to move the vehicle so that a predetermined exit condition is satisfied;
the stop condition is set based on a situation in which execution of the parking control is hindered;
the exit condition is determined based on an exit-sufficient state in which an exit angle is either within an acute-angle exit range or within an obtuse-angle exit range;
the exit angle is an angle formed between a first unit vector which is along a central axis line in a width direction of the vehicle and is oriented to a traveling direction along which the vehicle traveled on a front-side road adjacent to the parking area before execution of the parking control, and a second unit vector which is oriented to a front side of the vehicle along a central axis line in a width direction of the vehicle during execution of the exit control;
the acute-angle exit range is equal to 0 degrees or more and a predetermined exit angle reference value or less;
the obtuse-angle exit range is equal to (180 degrees - the predetermined exit angle reference value) or more and 180 degrees or less;
the exit angle reference value is within a range of 0 degree or more and less than 90 degrees;
the front-side road is located on a side from which the vehicle enters the parking area during the parking control with respect to a front-rear direction of the parking area, and extends in a direction intersecting the front-rear direction of the parking area; and
the exit angle reference value is set greater as a width of the front-side road is greater.

2. The automatic parking device according to claim 1, wherein
the exit condition is set to be satisfied when an exit continuation distance which is a distance by which the vehicle has continued to travel in the exit-sufficient state is not less than a predetermined exit continuation distance threshold value.

3. The automatic parking device according to claim 1 or 2, wherein
the exit-sufficient state is a state in which the exit angle is only within the acute-angle exit range.

4. The automatic parking device according to any one of claims 1 to 3, wherein:
the parking control unit is configured to stop the exit control and resume the parking control when a predetermined parking-allowable condition is satisfied during the exit control; and
the parking-allowable condition is set based on a situation in which the vehicle can be parked in the parking area.
